# EUROPEAN PATENT APPLICATION

(11) **EP 4 578 884 A2**
(43) Date of publication of application: **02.07.2025**
(21) Application number: 25175671.4
(22) Date of filing: 14.03.2022
(51) Int. Cl.: C08F 222/10

(54) **RESIN COMPOSITION, PREPREG, AND FIBER-REINFORCED PLASTIC**

(30) Priority: 15.03.2021 JP 2021041609
(62) Divisional of application: 22771370.8
(71) Applicant: Mitsubishi Chemical Corporation, Tokyo 100-8251 (JP)
(72) Inventor: Akita, Takuya, Tokyo, 100-8251 (JP); Fukuhara, Yasuhiro, Tokyo, 100-8251 (JP)
(74) Representative: Hoffmann Eitle

(57) **Abstract**

There is provided a prepreg prepreg comprising reinforcing fibers and a matrix resin, wherein the matrix resin contains an epoxy resin, a cured product obtained in a case where the matrix resin is cured under a specific curing condition has a sea-island phase separation structure consisting of a domain X and a domain Y, wherein the domain X constitutes an island part in which a size R measured according to a specific measurement method is 400 nm or less and a ratio L/R of a distance L between the domains X to the size R is 1.1 or more, where R is set to a median value of a maximum Feret's diameter of the domain X, and L is set to a median value of a distance from a centroid of the domain X to a centroid of another domain X most adjacent to the domain X.

## Description

### [Technical Field]

The present invention relates to a curable resin composition as well as a film, a molded article, a prepreg, and a fiber-reinforced plastic, which use the curable resin composition, where these are suitably used for use applications in sports/leisure, use applications in general industries, use application for aircraft materials, and the like.

Priority is claimed on Japanese Patent Application No. 2021-041609 filed March 15, 2021, the contents of which are incorporated herein by reference.

### [Background Art]

A fiber-reinforced plastic, which is one of fiber-reinforced composite articles, has a reduced weight, has high strength, and has high rigidity, and thus it is widely used from use applications in sports/leisure to industrial use applications such as automobiles and aircraft. As a manufacturing method for a fiber-reinforced plastic, there is a method using an intermediate material, that is, a prepreg, in which a reinforcing material consisting of long fibers (continuous fibers) such as reinforcing fibers is impregnated with a matrix resin. According to this method, there is an advantage that a content of reinforcing fibers of a fiber-reinforced plastic is easily controlled and the fiber-reinforced plastic can be designed to have a high content of reinforcing fibers, and a molded product can be obtained in a case of laminating a plurality of layers of the prepreg and then carrying out thermal curing.

Due to the need for weight reduction, carbon fibers having an excellent specific strength and an excellent specific elastic modulus have been used as reinforcing fibers, and an epoxy resin having excellent adhesiveness to the carbon fibers has been widely used as a matrix resin. However, a cured product of an epoxy resin generally tends to be brittle and have low toughness. Therefore, in order to improve the fracture toughness and the rigidity of the fiber-reinforced plastic, the improvement of the toughness of the epoxy resin has been a technical object to be achieved. In the related art, the toughness of epoxy resins has been increased by a modification method using engineering plastics such as polyether sulfone. In addition, in recent years, studies have been made to improve toughness by adding a modifying agent such as a block copolymer to use a phase separation structure generated in a curing process of a resin. However, in any of the methods, the glass transition temperature (Tg) or the elastic modulus of the cured product tends to decrease, and a significant increase in viscosity due to the addition of the polymer is inevitable.

In order to solve these problems, an attempt has been made to polymerize a monomer, serving as a source of a modifying agent, in a system according to an "in-situ polymerization method" and then carry out the generation of a modifying agent and the curing reaction of an epoxy resin at the same time (Non Patent Document 1). In this attempt, a vinyl polymer that is generated according to radical polymerization has been used as a modifying agent, and technological developments for manufacturing an intermediate material by using an epoxy resin and a radically polymerizable monomer in combination have progressed in the field of fiber-reinforced plastics as well (Patent Documents 1 to 3).

### [Citation List]

### [Non Patent Document]

### [Non Patent Document 1]

Network Polymer, written by Toshiyuki Oyama, 36 211 (2015)

### [Patent Documents]

[Patent Document 1]
   Japanese Patent No. 3669090
[Patent Document 2]
   Japanese Unexamined Patent Application, First Publication No. H11-43547
[Patent Document 3]
   Japanese Patent No. 5424021

### [Summary of Invention]

### [Technical Problem]

One of objects of the present invention is to provide a prepreg that provides excellent toughness and an excellent elastic modulus in a case of being cured into a cured product. In addition, another object of the present invention is to provide a prepreg that is capable of forming a phase separation structure of a matrix resin that can improve toughness in a case of being cured into a cured product.

### [Solution to Problem]

The present invention has the following aspects [1] to [52].
[1] A prepreg comprising:
   carbon fibers; and
   a matrix resin,
   wherein the matrix resin contains an epoxy resin, a curing agent, a monofunctional (meth)acrylate monomer having a molecular weight of 200 or more, and a polyfunctional (meth)acrylate monomer.
[2] The prepreg according to [1],
   wherein the curing agent contains a component (b1) which is at least one kind selected from dicyandiamide, ureas, imidazoles, and aromatic amines.
[3] The prepreg according to [2],
   wherein the curing agent contains dicyandiamide.
[4] The prepreg according to any one of [1] to [3],
   wherein the curing agent contains a component (b2) which is at least one kind of a radical polymerization initiator.
[5] The prepreg according to [4],
   wherein the component (b2) includes at least one kind of peroxide-based compounds selected from the group consisting of a diacyl peroxide, an alkyl peroxyester, a peroxydicarbonate, a peroxyketal, a dialkyl peroxide, and a hydroperoxide.
[6] The prepreg according to any one of [1] to [5],
   wherein a content of the polyfunctional (meth)acrylate monomer in the prepreg is larger than a content of the monofunctional (meth)acrylate monomer having a molecular weight of 200 or more.
[7] The prepreg according to any one of [1] to [6],
   wherein the monofunctional (meth)acrylate monomer having a molecular weight of 200 or more includes at least one kind of a monomer selected from isobornyl (meth)acrylate, tetrahydrofurfuryl (meth)acrylate, phenoxyethyl (meth)acrylate, dicyclopentenyl (meth)acrylate, and dicyclopentanyl (meth)acrylate.
[8] The prepreg according to any one of [1] to [7],
   wherein the polyfunctional (meth)acrylate monomer includes an acrylate monomer of the following structural formula (1). [0009] 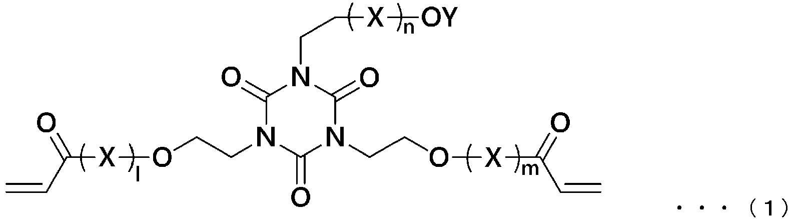
   [0010] (In Formula (1), X's each independently represent ethylene oxide or propylene oxide, n, m, and l each independently represent an integer of 0 to 10, and Y represents an acryloyl group or a hydrogen atom.)
[9] The prepreg according to any one of [1] to [8],
   wherein the prepreg contains 5 to 45 parts by mass of the monofunctional (meth)acrylate monomer having a molecular weight of 200 or more and the polyfunctional (meth)acrylate monomer with respect to 100 parts by mass of a total epoxy resin.
[10] A prepreg comprising:
   reinforcing fibers; and
   a matrix resin,
   wherein the matrix resin contains an epoxy resin,
   a cured product obtained in a case where the matrix resin is cured under the following curing condition has a sea-island phase separation structure consisting of a domain X and a domain Y,
   the domain X constitutes an island part in which a size R is 400 nm or less, where the size R is measured according to the following measurement method, and
   a ratio L/R of a distance L between the domains X to the size R is 1.1 or more,
   the curing condition; the matrix resin is injected between two glass plates to be formed into a plate shape having a thickness of 2 mm, and a temperature is raised to an oven atmospheric temperature of 130°C at 2 °C/min and maintained at 130°C for 90 minutes,
   the measurement condition; as a pretreatment, a section having a thickness of 60 to 90 nm is cut out using an ultramicrotome from a cross section of the cured product, and the obtained section is exposed to an RuO₄ vapor for 7 minutes to be subjected to electron staining, or a section having a thickness of 60 to 90 nm is cut out using an ultramicrotome from a cross section of the cured product that has been exposed in advance to an OsO₄ vapor for 16 hours, in a state where an acceleration voltage is set to 80 kV, a transmission electron microscope (TEM) is used to observe phase separation structure of the section subjected to the electron staining by the pretreatment, to acquire a TEM image, the obtained TEM image is subjected to smoothing and background subtraction by using image analysis software, and subsequently, a boundary of a binarized image is detected, where the size R is set to a median value of a maximum Feret's diameter of the domain X, and the distance L between the domains X is set to a median value of a distance from a centroid of the domain X to a centroid of another domain X most adjacent to the domain X.
[11] The prepreg according to [10],
   wherein the ratio L/R is 100 or less.
[12] The prepreg according to [10] or [11],
   wherein the size R is 1 nm or more.
[13] The prepreg according to any one of [10] to [12],
   wherein the matrix resin contains the following components (A) and (B),
   the component (A): a (meth)acrylate monomer,
   the component (B): a curing agent.
[14] The prepreg according to [13],
   wherein the component (A) includes a monofunctional (meth)acrylate monomer.
[15] The prepreg according to [13] or [14],
   wherein the component (A) includes a polyfunctional (meth)acrylate monomer.
[16] The prepreg according to any one of [10] to [15],
   wherein the domain X contains a polymer of a (meth)acrylate monomer.
[17] The prepreg according to any one of [10] to [16],
   wherein the domain Y contains a cured product of an epoxy resin.
[18] The prepreg according to any one of [13] to [17],
   wherein the component (B) includes a component (b1) which is at least one kind selected from dicyandiamide, ureas, imidazoles, and aromatic amines.
[19] The prepreg according to [18],
   wherein the prepreg contains 1 to 15 parts by mass of the component (b1) with respect to 100 parts by mass of a total epoxy resin contained in the matrix resin.
[20] The prepreg according to any one of [13] to [19],
   wherein the component (B) includes a component (b2) which is at least one kind of a radical polymerization initiator.
[21] The prepreg according to [20],
   wherein the prepreg contains 0.1 to 5 parts by mass of the component (b2) with respect to 100 parts by mass of an entire matrix resin.
[22] The prepreg according to [20] or [21],
   wherein the component (b2) includes a compound having a 10-hour half-life temperature of 70°C or higher.
[23] The prepreg according to any one of [20] to [22],
   wherein the component (b2) includes at least one kind of peroxide-based compounds selected from the group consisting of a diacyl peroxide, an alkyl peroxyester, a peroxydicarbonate, a peroxyketal, a dialkyl peroxide, and a hydroperoxide.
[24] The prepreg according to any one of [10] to [23],
   wherein the prepreg contains 5 to 45 parts by mass of the component (A) with respect to 100 parts by mass of an entire epoxy resin.
[25] The prepreg according to any one of [10] to [24],
   wherein the reinforcing fibers include carbon fibers.
[26] A fiber-reinforced plastic that is obtained by curing the prepreg according to any one of [10] to [25].
[27] A fiber-reinforced plastic comprising:
   reinforcing fibers; and
   a matrix resin,
   wherein the matrix resin has a sea-island phase separation structure consisting of a domain X and a domain Y, the domain X constitutes an island part in which a size R is 400 nm or less, where the size R is measured according to the following measurement method, and a ratio L/R of a distance L between the domains X to the size R is 1.1 or more,
   the measurement condition; as a pretreatment, a cross section of the fiber-reinforced plastic is subjected to mechanical polishing to obtain a mirror surface, the obtained smooth cross section is exposed to an RuO₄ vapor or an OsO₄ vapor to be subjected to electron staining, after carrying out a conducting treatment, a scanning electron microscope (SEM) set to an acceleration voltage of 5 kV is subsequently used to acquire a backscattered electron image of the cross section subjected to the electron staining, a phase separation structure is observed, the obtained backscattered electron image is subjected to smoothing and background subtraction by using image analysis software, and subsequently, a boundary of a binarized image is detected, where the size R is set to a median value of a maximum Feret's diameter of the domain X, and the distance L between the domains X is set to a median value of a distance from a centroid of the domain X to a centroid of another domain X most adjacent to the domain X.
[28] The fiber-reinforced plastic according to [27],
   wherein the ratio L/R is 100 or less.
[29] The fiber-reinforced plastic according to [27] or [28],
   wherein the size R is 1 nm or more.
[30] The fiber-reinforced plastic according to any one of [27] to [29],
   wherein the domain X contains a polymer of a (meth)acrylate monomer.
[31] The fiber-reinforced plastic according to any one of [27] to [30],
   wherein the domain Y contains a cured product of an epoxy resin.
[32] The fiber-reinforced plastic according to any one of [27] to [31],
   wherein the reinforcing fibers include carbon fibers.
[34] The prepreg according to any one of [1] to [25],
   wherein a cured product obtained in a case where the matrix resin is cured under the following curing condition has a sea-island phase separation structure consisting of a domain X and a domain Y, the domain X constitutes an island part in which a size R is 400 nm or less, where the size R is measured according to the following measurement method, and a ratio L/R of a distance L between the domains X to the size R is preferably 1.1 or more and 100 or less, more preferably 1.1 or more and 50 or less, still more preferably 1.25 or more and 10 or less, and particularly preferably 1.5 or more and 5.0 or less.
[35] The prepreg according to any one of [1] to [25] and [34],
   wherein the matrix resin contains an epoxy resin and a (meth)acrylate monomer, and a content of the (meth)acrylate monomer is preferably 5 parts by mass or more and 45 parts by mass or less, and more preferably 10 parts by mass or more and 40 parts by mass or less, with respect to 100 parts by mass of the total epoxy resin in the prepreg.
[36] The prepreg according to any one of [1] to [25] and [34] to [35],
   wherein the matrix resin contains an epoxy resin and a component (b1) that cures the epoxy resin, and a content of the component (b1) is such that an amount of 1 part by mass or more and 15 parts by mass or less is preferably contained and an amount of 2 parts by mass or more and 12 parts by mass or less is more preferably contained with respect to 100 parts by mass of a total epoxy resin contained in the matrix resin.
[37] The prepreg according to any one of [1] to [25] and [34] to [36],
   wherein the matrix resin contains an epoxy resin and dicyandiamide, and a content of the dicyandiamide is preferably 1 to 15 parts by mass and more preferably 2 to 10 parts by mass with respect to 100 parts by mass of a total epoxy resin contained in the matrix resin.
[38] The prepreg according to any one of [1] to [25] and [34] to [37],
   wherein the matrix resin contains a (meth)acrylate monomer and a component (b2) that cures the (meth)acrylate monomer, and a content of the component (b2) is such that an amount of 0.1 parts by mass or more is preferably contained and an amount of 0.2 parts by mass or more is more preferably contained with respect to 100 parts by mass of an entire matrix resin.
[39] The prepreg according to any one of [1] to [25] and [34] to [38],
   wherein the matrix resin contains a liquid epoxy resin, and a viscosity of the epoxy resin (liquid epoxy resin) is preferably 0.1 Pa·s or more and 500 Pa·s or less and more preferably 0.1 Pa·s or more and 300 Pa·s or less at 25°C.
[40] The prepreg according to any one of [1] to [25] and [34] to [39],
   wherein the matrix resin contains an epoxy resin, and a content of the epoxy resin is preferably 70 parts by mass or more and less than 100 parts by mass, and more preferably 80 parts by mass or more and 95 parts by mass or less, with respect to 100 parts by mass of the matrix resin.
[41] The prepreg according to any one of [1] to [25] and [34] to [40],
   wherein the matrix resin contains a liquid epoxy resin, and a content of the liquid epoxy resin is preferably 20 parts by mass or more and 80 parts by mass or less, more preferably 20 parts by mass or more and 75 parts by mass or less, still more preferably 25 parts by mass or more and 70 parts by mass or less, and particularly preferably 28 parts by mass or more and 50 parts by mass or less, with respect to 100 parts by mass of the total epoxy resin contained in an epoxy resin composition.
[43] The prepreg according to any one of [1] to [25] and [34] to [42],
   wherein the matrix resin contains a solid epoxy resin, and a content of the solid epoxy resin is preferably 10 parts by mass or more and 80 parts by mass or less, more preferably 13 parts by mass or more and 70 parts by mass or less, and still more preferably 15 parts by mass or more and 60 parts by mass or less, with respect to 100 parts by mass of the total epoxy resin contained in an epoxy resin composition.
[44] The prepreg according to any one of [1] to [25] and [34] to [43],
   wherein the matrix resin contains an epoxy resin and a thermoplastic resin, and a content of the thermoplastic resin is such that an amount of 1 part by mass or more and 30 parts by mass or less is preferably contained, an amount of 2 parts by mass or more and 10 parts by mass or less is more preferably contained, and an amount of 3 parts by mass or more and 6 parts by mass or less is still more preferably contained, with respect to 100 parts by mass of a total epoxy resin contained in the matrix resin.
[45] The prepreg according to any one of [1] to [25] and [34] to [44],
   wherein the matrix resin contains a liquid epoxy resin and a solid epoxy resin, and a mass ratio represented by [content of liquid epoxy resin]/[content of solid epoxy resin] is preferably 10/90 to 50/90, more preferably 20/80 to 40/60, and still more preferably 25/75 to 35/65.
[46] The prepreg according to any one of [1] to [25] and [34] to [45],
   wherein the matrix resin contains an epoxy resin and a (meth)acrylate monomer, and a mass ratio represented by [content of epoxy resin]/[content of (meth)acrylate monomer] is preferably 100/75 to 100/5, more preferably 100/50 to 100/10, and still more preferably 100/30 to 100/20.
[47] The prepreg according to any one of [1] to [25] and [34] to [46],
   wherein in a case where a resin plate having a thickness of 2 mm is formed from the matrix resin, a bending strength of the resin plate is preferably 170 MPa or more and 200 MPa or less, and more preferably 175 MPa or more and 190 MPa or less.
[48] The prepreg according to any one of [1] to [25] and [34] to [47],
   wherein in a case where a resin plate having a thickness of 2 mm is formed from the matrix resin, a bending elastic modulus of the resin plate is preferably 3.60 GPa or more and 10.0 GPa or less, and more preferably 3.65 GPa or more and 5.0 GPa or less.
[49] The prepreg according to any one of [1] to [25] and [34] to [48],
   wherein in a case where a resin plate having a thickness of 2 mm is formed from the matrix resin, a strain at maximum stress of the resin plate is more preferably more than 0% and 7.0% or less, and more preferably more than 0% and 6.5% or less.
[50] The prepreg according to any one of [1] to [25] and [34] to [49],
   wherein in a case where a resin plate having a thickness of 2 mm is formed from the matrix resin, a breaking strain of the resin plate is preferably 8.0% or more and 20.0% or less, and more preferably 8.5% or more and 15% or less.
[51] The prepreg according to any one of [1] to [25] and [34] to [50],
   wherein the matrix resin contains a (meth)acrylate monomer, and the (meth)acrylate monomer is preferably a trifunctional (meth)acrylate monomer; more preferably a trifunctional (meth)acrylate monomer that is obtained by esterification by reacting tris(2-hydroxyethyl)isocyanurate with (meth)acrylic acid; and still more preferably a trifunctional (meth)acrylate monomer represented by Formula (2). 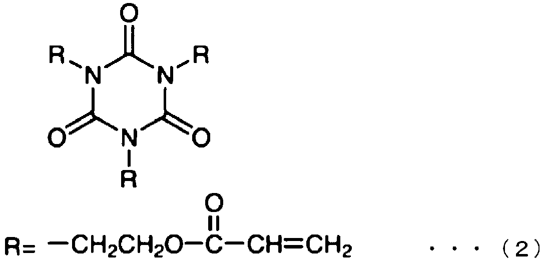
[52] A manufacturing method for the prepreg according to any one of [1] to [25] and [34] to [51], the manufacturing method comprising:
   an impregnation step of superimposing a film consisting of the matrix resin and heating and pressurizing the superimposed film to impregnate the reinforcing fiber substrate including the carbon fibers or reinforcing fibers with the matrix resin.

In addition, the present invention also has the following forms of [1a] to [22a].
[1a] A resin composition comprising:
   an epoxy resin;
   a curing agent;
   a monofunctional (meth)acrylate monomer having a molecular weight of 200 or more and
   a polyfunctional (meth)acrylate monomer.
[2a] The resin composition according to [1a],
   wherein the curing agent contains a component (b1) which is at least one kind selected from dicyandiamide, ureas, imidazoles, and aromatic amines.
[3a] The resin composition according to [2a],
   wherein the curing agent contains dicyandiamide.
[4a] The resin composition according to any one of [1a] to [3a],
   wherein the curing agent contains peroxide-based compounds.
[5a] The resin composition according to any one of [1a] to [4a],
   wherein a content of the polyfunctional (meth)acrylate monomer in the resin composition is larger than a content of the monofunctional (meth)acrylate monomer having a molecular weight of 200 or more.
[6a] The resin composition according to any one of [1a] to [5a],
   wherein the monofunctional (meth)acrylate monomer having a molecular weight of 200 or more includes at least one kind of a monomer selected from isobornyl (meth)acrylate, tetrahydrofurfuryl (meth)acrylate, phenoxyethyl (meth)acrylate, dicyclopentenyl (meth)acrylate, and dicyclopentanyl (meth)acrylate.
[7a] The resin composition according to any one of [1a] to [6a],
   wherein the polyfunctional (meth)acrylate monomer includes an acrylate monomer of the following structural formula (1). 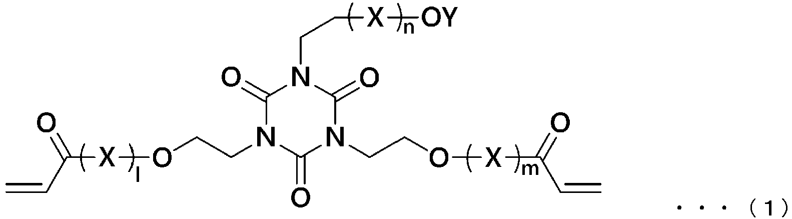
   (In Formula (1), X's each independently represent ethylene oxide or propylene oxide, n, m, and l each independently represent an integer of 0 to 10, and Y represents an acryloyl group or a hydrogen atom.)
[8a] The resin composition according to any one of [1a] to [7a],
   wherein the resin composition contains 5 to 45 parts by mass of the monofunctional (meth)acrylate monomer having a molecular weight of 200 or more and the polyfunctional (meth)acrylate monomer with respect to 100 parts by mass of the total epoxy resin.
[9a] The resin composition according to any one of [1a] to [8a],
   wherein a cured product obtained in a case where the resin composition is cured under the following curing condition has a sea-island phase separation structure consisting of a domain X and a domain Y, the domain X constitutes an island part in which a size R is 400 nm or less, where the size R is measured according to the following measurement method, and a ratio L/R of a distance L between the domains X to the size R is 1.1 or more,
   the curing condition; the matrix resin is injected between two glass plates to be formed into a plate shape having a thickness of 2 mm, and a temperature is raised to an oven atmospheric temperature of 130°C at 2 °C/min and maintained at 130°C for 90 minutes,
   the measurement condition; as a pretreatment, a section having a thickness of 60 to 90 nm is cut out using an ultramicrotome from a cross section of the cured product, and the obtained section is exposed to an RuO₄ vapor for 7 minutes to be subjected to electron staining, or a section having a thickness of 60 to 90 nm is cut out using an ultramicrotome from a cross section of the cured product that has been exposed in advance to an OsO₄ vapor for 16 hours, in a state where an acceleration voltage is set to 80 kV, a transmission electron microscope (TEM) is used to observe phase separation structure of the section subjected to the electron staining by the pretreatment, to acquire a TEM image, the obtained TEM image is subjected to smoothing and background subtraction by using image analysis software, and subsequently, a boundary of a binarized image is detected,
   where the size R is set to a median value of a maximum Feret's diameter of the domain X, and the distance L between the domains X is set to a median value of a distance from a centroid of the domain X to a centroid of another domain X most adjacent to the domain X. [10a] A resin composition comprising:
   an epoxy resin,
   wherein a cured product obtained in a case where the resin composition is cured under the curing condition according to [9a] has a sea-island phase separation structure consisting of a domain X and a domain Y, the domain X constitutes an island part in which a size R is 400 nm or less, where the size R is measured according to the measurement method according to [9a], and a ratio L/R of a distance L between the domains X to the size R is 1.1 or more.
[11a] The resin composition according to [10a],
   wherein the ratio L/R is 100 or less.
[12a] The resin composition according to [10a] or [11a],
   wherein the size R is 1 nm or more.
[13a] The resin composition according to any one of [10a] to [12a],
   wherein the matrix resin contains the following components (A) and (B).
   the component (A): a (meth)acrylate monomer,
   the component (B): a curing agent.
[14a] The resin composition according to [13a],
   wherein the component (A) includes a monofunctional (meth)acrylate monomer.
[15a] The resin composition according to [13a] or [14a],
   wherein the component (A) includes a polyfunctional (meth)acrylate monomer.
[16a] The resin composition according to any one of [10a] to [15a],
   wherein the domain X contains a polymer of a (meth)acrylate monomer.
[17a] The resin composition according to any one of [10a] to [16a],
   wherein the domain Y contains a cured product of an epoxy resin.
[18a] The resin composition according to any one of [13a] to [17a],
   wherein the component (B) includes a component (b1) which is at least one kind selected from dicyandiamide, ureas, imidazoles, and aromatic amines.
[19a] The resin composition according to [18a],
   wherein the resin composition contains 1 to 15 parts by mass of the component (b1) with respect to 100 parts by mass of a total epoxy resin contained in the matrix resin.
[20a] The resin composition according to any one of [13a] to [19a],
   wherein the component (B) includes peroxide-based compounds.
[21a] The resin composition according to any one of [10a] to [20a],
   wherein the resin composition contains 5 to 45 parts by mass of the component (A) with respect to 100 parts by mass of the entire epoxy resin.
[22a] A film comprising the resin composition according to any one of [1a] to [21a].

### [Advantageous Effects of Invention]

According to the present invention, it is possible to provide a cured product and a fiber-reinforced plastic, which have excellent toughness and an excellent elastic modulus.

### [Brief Description of Drawings]

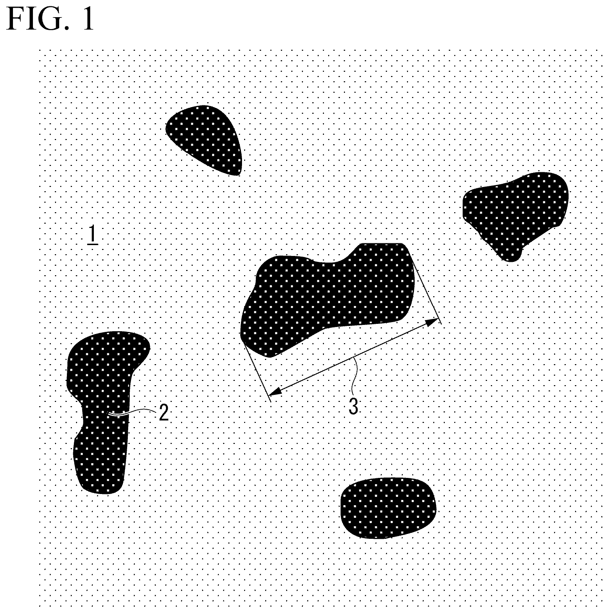

FIG. 1 is a cross-sectional view of a cured product of a matrix resin.

### [Description of Embodiments]

### [Prepreg]

One form of a prepreg contains carbon fibers and a matrix resin. The matrix resin contains an epoxy resin, a cured product obtained in a case where the matrix resin is cured under the following curing conditions has a sea-island phase separation structure consisting of a domain X and a domain Y, the domain X constitutes an island part in which a size R is 400 nm or less, where the size R is measured according to the following measurement method, and a ratio L/R of a distance L between the domains X to the size R is 1.1 or more. Although the elastic modulus and the toughness are in a trade-off relationship, it is possible to achieve both the elastic modulus and the toughness by providing such a phase separation structure that allows a domain having an excellent elastic modulus to coexist with a domain having an excellent toughness. The matrix resin may contain the following components (A) and/or (B).
the component (A): a (meth)acrylate monomer,
Component (B): a curing agent
the curing condition; the matrix resin is injected between two glass plates to be formed into a plate shape having a thickness of 2 mm, and a temperature is raised to an oven atmospheric temperature of 130°C at 2 °C/min and maintained at 130°C for 90 minutes,

For the curing of the matrix resin, it is preferable to use only a matrix resin extracted from the prepreg or a matrix resin before impregnation. In addition, a section may be obtained from a matrix resin in which a prepreg from which a part has been cut out is laminated, the entire laminate is cured under the above-described condition, and then the cut-out part is allowed to be fluidized and then cured so that the cut-out part is filled. Alternatively, a section may be obtained from a cured product of a matrix resin that bleeds out from a carbon fiber substrate part in a case where the prepreg is subjected to thermal curing while being pressurized.

### Measurement condition;

As a pretreatment, a section having a thickness of 60 to 90 nm is cut out using an ultramicrotome from a cross section of the cured product, and the obtained section is exposed to an RuO₄ vapor for 7 minutes to be subjected to electron staining. Alternatively, a section having a thickness of 60 to 90 nm is cut out using an ultramicrotome from a cross section of the cured product that has been exposed in advance to an OsO₄ vapor for 16 hours, whereby a section subjected to the electron staining is obtained. The cross section of the cured product can have a size of 500 µm × 300 µm. Using a transmission electron microscope (TEM), a phase separation structure of the section subjected to the electron staining is observed in a state where an acceleration voltage is set to 80 kV, and a TEM image is acquired. The obtained TEM image is subjected to smoothing and background subtraction by using image analysis software, and then a boundary of a binarized image is detected. The size R is set to a median value of a maximum Feret's diameter of the domain X. The distance L between the domains X is set to a median value of a distance from a centroid of the domain X to a centroid of another domain X most adjacent to the domain X.

### <Sea-island phase separation structure>

A phase separation structure can be formed in a case where two or more phases containing components different from each other as main components are present, among the components constituting the cured product. In the curing process, two or more phases may be phase-separated from a state in which each component is uniformly compatible before curing. In a case of a phase separation structure in which the maximum Feret's diameter of each of the phases containing components different from each other as main components is less than 1 nm, the phase separation structure is in a compatible state.

In the phase separation structure, it is possible to observe a smooth cross section of the cured product with a scanning electron microscope, a transmission electron microscope, an interatomic force microscope, or the like. In a case of a cured product containing no reinforcing fibers, a smooth cross section of the cured product can be obtained by using a microtome method or a freeze fracturing method, and in a case of a cured product containing reinforcing fibers, it can be obtained by a mechanical polishing method, an ion milling processing method, a focused ion beam processing method, or the like. It is preferable that the cross section to be observed has smoothness (a mirror surface) such that light is uniformly reflected. When an electron microscope is used, electron staining may be carried out as necessary. The staining can be carried out using a general staining agent such as RuO₄ or OsO₄. In a case where there are two or more kinds of domains that differ in contrast in the electron microscope image, it can be determined that a phase separation structure having two or more phases is present.

A sea-island phase separation structure is formed in a case where the cured product has a continuous phase and a dispersed phase. As shown in FIG. 1, in a cross section of a cured product obtained by curing a prepreg under a specific condition, a phase indicated by 2 corresponding to the island is denoted as a domain X, and a phase indicated by 1 corresponding to the sea is denoted as a domain Y. The size R of the domain X is 400 nm or less, and it is preferably 300 nm or less from the viewpoint of toughness. From the viewpoint of achieving both the toughness and the elastic modulus, the size R is preferably 1 nm or more and more preferably 20 nm or more. The ratio L/R of the distance L between the domains X to the size R is 1.1 or more, and it is preferably 1.25 or more and more preferably 1.5 or more since the fact that the domain X is uniformly dispersed without being aggregated is effective for improving toughness. From the viewpoint that the toughness can be exhibited by suitably maintaining a distance between the domains X, the toughness is preferably 100 or less.

As shown in 3 of FIG. 1, the size R of the domain X is set to a median value of the maximum distance (maximum Feret's diameter) between parallel tangential lines tangent to the outline of each domain X. In addition, The distance L between the domains X is set to a median value of a distance (most adjacent distance) from a centroid of a certain domain X to a centroid of another domain X most adjacent to the domain X. It is noted that each median value is determined from the distribution of the size R and the distance L, which are obtained by analyzing 150 or more domains X. When domains fewer than, for example, 1/20 of the domains to be analyzed are extracted, they can be removed as noise.

From the viewpoint of improving the toughness, the domain X preferably contains a polymer of a (meth)acrylate monomer. From the viewpoint of the adhesiveness to the carbon fibers, it is preferable that the domain Y which is a continuous phase contains a cured product of an epoxy resin having excellent adhesiveness to the carbon fibers.

The size R of the domain X can be increased by at least one of the following adjustment methods.
(1a) A (meth)acrylate monomer is incorporated into the matrix resin, and a blending proportion thereof is increased.
(2a) A (meth)acrylate monomer is incorporated into the matrix resin, and the proportion of the polyfunctional form in the (meth)acrylate monomer is reduced.
(3a) Two or more kinds of epoxy resins having molecular weights different from each other are incorporated into the matrix resin, and the proportion of the components having a low molecular weight in the epoxy resin is increased.

The size R of the domain X can be reduced by at least one of the following adjustment methods.
(1b) A (meth)acrylate monomer is incorporated into the matrix resin, and a blending proportion thereof is reduced.
(2b) A (meth)acrylate monomer is incorporated into the matrix resin, and the proportion of the polyfunctional form in the (meth)acrylate monomer is increased.
(3b) Two or more kinds of epoxy resins having molecular weights different from each other are incorporated into the matrix resin, and the proportion of the components having a low molecular weight in the epoxy resin is reduced.

### <Component (A)>

The component (A) is a (meth)acrylate monomer. The component (A) contributes to the improvement of the strength, elastic modulus, and toughness of the cured product. Examples of the (meth)acrylate monomer include a monofunctional (meth)acrylate monomer and a di- or higher functional (meth)acrylate monomer (may be referred to as a polyfunctional (meth)acrylate monomer). One kind of these may be used alone, or two or more kinds thereof may be used in combination. For the intended purpose of balancing the strength or elastic modulus of the cured product with the toughness and from the viewpoint of dimensional stability at the time of molding, it is preferable to use a monofunctional (meth)acrylate monomer and a difunctional to tetrafunctional (meth)acrylate monomer in combination. Since the impregnation temperature can be raised in a case of being used in the prepreg, the (meth)acrylate monomer preferably has a molecular weight of 200 or more and more preferably has a molecular weight of 250 or more. From the viewpoint of being uniformly dispersed in the matrix resin, the molecular weight is preferably 2,000 or less, and the molecular weight is more preferably 1,500 or less. From the viewpoint of the toughness of the cured product, the polyfunctional (meth)acrylate monomer is preferably a monomer having a structural formula represented by Formula (1).

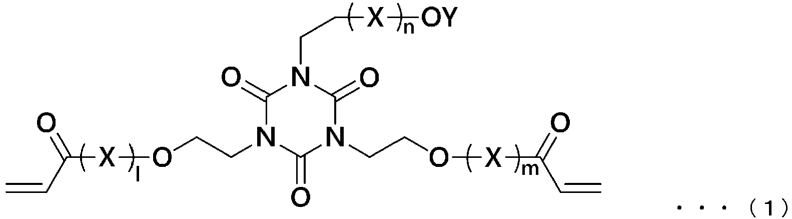

(In Formula (1), X's each independently represent ethylene oxide or propylene oxide, n, m, and l each independently represent an integer of 0 to 10, and Y represents an acryloyl group or a hydrogen atom.)

Examples of the monofunctional (meth)acrylate monomer include (meth)acrylic acid esters such as 2-hydroxyethyl (meth)acrylate, 2-hydroxypropyl (meth)acrylate, 4-hydroxybutyl (meth)acrylate, 4-hydroxybenzyl (meth)acrylate, 4-hydroxyphenyl (meth)acrylate, cyclohexanedimethanol mono(meth)acrylate, tetrahydrofurfuryl (meth)acrylate, phenoxyethyl (meth)acrylate, cyclohexyl (meth)acrylate, isobornyl (meth)acrylate, norbornyl (meth)acrylate, 2-(meth)acryloyloxymethyl-2-methylbicycloheptane, adamantyl (meth)acrylate, benzyl (meth)acrylate, phenyl (meth)acrylate, dicyclopentenyl (meth)acrylate, dicyclopentanyl (meth)acrylate, tetracyclododecanyl (meth)acrylate, methyl (meth)acrylate, ethyl (meth)acrylate, n-butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, icosyl (meth)acrylate, 2-methoxyethyl (meth)acrylate, 3-methoxybutyl (meth)acrylate, methoxytriethylene glycol (meth)acrylate, butoxyethyl (meth)acrylate, methoxydipropylene glycol (meth)acrylate, polyethylene glycol (meth)acrylate, polypropylene glycol (meth)acrylate, polyethylene glycol monomethyl ether (meth)acrylate, polypropylene glycol monomethyl (meth)acrylate, 4-acryloyloxymethyl-2-methyl-2-ethyl-1,3-dioxolane, 4-acryloyloxymethyl-2-methyl-2-isobutyl-1,3-dioxolane, o-phenylphenol (meth)acrylate, ethoxylated o-phenylphenol (meth)acrylate, N-(meth)acryloyloxyethyl hexahydrophthalimide, paracumylphenol (meth)acrylate, and ethoxylated paracumylphenol (meth)acrylate, trimethylolpropane formal (meth)acrylate. From the viewpoint of improving the toughness of the cured product and suppressing volatilization of the monomer at the impregnation temperature at the time of the production of the prepreg, isobornyl (meth)acrylate, tetrahydrofurfuryl (meth)acrylate, phenoxyethyl (meth)acrylate, dicyclopentenyl (meth)acrylate, or dicyclopentanyl (meth)acrylate is preferable.

Examples of the difunctional (meth)acrylate monomer include diols such as ethylene glycol, diethylene glycol, triethylene glycol, tetraethylene glycol, propylene glycol, dipropylene glycol, tripropylene glycol, tetrapropylene glycol, 1,3-butylene glycol, 1,4-butanediol, 1,5-pentanediol, neopentyl glycol, 3-methyl-1,5-pentanediol, 2,4-diethyl-1,5-pentanediol, 1,6-hexanediol, 1,9-nonanediol, 2-methyl-1,8-octanediol, 1,10-decanediol, neopentyl glycol hydroxypivalate, tricyclodecanedimethanol, cyclohexanedimethanol, bisphenol A, hydrogenated bisphenol A, dioxane glycol, and bisphenoxyfluoreneethanol; and di(meth)acrylates obtained by esterification by reacting diols obtained by adding ethylene oxide, propylene oxide, or caprolactone to these diols with (meth)acrylic acid. A difunctional (meth)acrylate monomer having a glycol skeleton is preferable from the viewpoint of compatibility with an epoxy resin, and a difunctional (meth)acrylate monomer having a bisphenol A skeleton is preferable, from the viewpoint of obtaining high mechanical properties.

Examples of the trifunctional (meth)acrylate monomer include tri(meth)acrylates obtained by esterification by reacting, with (meth)acrylic acid, alcohols obtained by adding ethylene oxide, propylene oxide, caprolactone, or the like to a triol or tetraol such as trimethylolpropane, tris(2-hydroxyethyl)isocyanurate, glycerol, or pentaerythritol. A trifunctional (meth)acrylate monomer obtained from tris(2-hydroxyethyl)isocyanurate is preferable, a trifunctional (meth)acrylate monomer that is obtained by esterification by reacting tris(2-hydroxyethyl)isocyanurate with (meth)acrylic acid is more preferable, and a trifunctional (meth)acrylate monomer represented by Formula (2) is still more preferable.

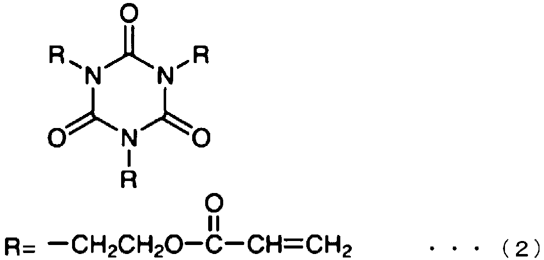

Examples of the tetra- or higher functional (meth)acrylate compound include polyols such as ditrimethylolpropane, pentaerythritol, dipentaerythritol, and tripentaerythritol; and poly(meth)acrylates obtained by esterification by reacting, with (meth)acrylic acid, polyols obtained by adding ethylene oxide, propylene oxide, or caprolactone to these polyols.

The matrix resin may contain the following component (C) different from the component (A). The content can be 0.5 parts by mass or more and 30 parts by mass or less with respect to 100 parts by mass of the total epoxy resin.

### Component (C): A (meth)acrylate oligomer

Examples of the (meth)acrylate oligomer include urethane (meth)acrylates obtained by directly adding hydroxyethyl (meth)acrylate, hydroxypropyl (meth)acrylate, pentaerythritol triacrylate, or the like, to at least one polyisocyanate such as 1,3- and 1,4-diisocyanatocyclohexanes, 3-isocyanatomethyl-3,5,5-trimethylcyclohexylisocyanate, 4,4'-methylenedicyclohexyldiisocyanate, 2,4'-methylenedicyclohexyldiisocyanate, 2,2'-methylenedicyclohexyldiisocyanate, tolylene diisocyanate, diphenylmethane diisocyanate, or hexamethylene diisocyanate. One kind of these can be used alone or in a combination of two or more kinds thereof. In addition, the following compounds can be used: vinyl ester monomers such as vinyl acetate, vinyl butyrate, N-vinylformamide, N-vinylacetamide, N-vinyl-2-pyrrolidone, N-vinylcaprolactam, and divinyl adipate; vinyl ethers such as ethyl vinyl ether and phenyl vinyl ether; and acrylamides such as acrylamide, N,N-dimethylmethacrylamide, N,N-dimethylacrylamide, N-methylolacrylamide, N-methoxymethylacrylamide, N-butoxymethylacrylamide, N-t-butylacrylamide, N-benzyl (meth)acrylamide, N-phenyl (meth)acrylamide, N-(4-hydroxybenzyl) (meth)acrylamide, N-(4-hydroxyphenyl) (meth)acrylamide, acryloyl morpholine, hydroxyethyl acrylamide, and methylene bisacrylamide.

An amount of 5 parts by mass or more of the component (A) is preferably contained, and an amount of 10 parts by mass or more thereof is more preferably contained, with respect to 100 parts by mass of the total epoxy resin in the prepreg. An amount of 45 parts by mass or less thereof is preferably contained, and an amount of 40 parts by mass or less thereof is more preferably contained, with respect to 100 parts by mass of the total epoxy resin in the prepreg. In a case where the content of the component (A) is in this range, the size of the phase separation structure is in an appropriate range, and the balance between the strength, the elastic modulus, and the strain is favorable. From the viewpoint that a cured product having excellent interface adhesiveness to the epoxy component can be obtained and the strength is excellent, the content proportion of the polyfunctional (meth)acrylate monomer in the component (A) is preferably 5% by mass or more, more preferably 30% by mass or more, and still more preferably 70% by mass or more. It is more preferably 90% by mass or less and more preferably 80% by mass or less from the viewpoint of controlling the phase separation structure and improving the toughness associated with the control. From the viewpoint of controlling the phase separation structure and improving the toughness associated with the control, the content proportion of the monofunctional (meth)acrylate monomer in the component (A) is preferably 1% by mass or more, more preferably 10% by mass or more, and still more preferably 20% by mass or more. It is more preferably 70% by mass or less and more preferably 30% by mass or less in order to suppress the decrease in the elastic modulus. In a case of the prepreg, the content proportion of the polyfunctional (meth)acrylate monomer and the monofunctional (meth)acrylate monomer can be specified according to a separation analysis method such as a gas chromatography method or a liquid chromatography method, and in a case of the cured product, it can be specified according to a thermal decomposition gas chromatography method.

### <Component (B)>

The component (B) is a curing agent. It is preferable to contain a component (b1) that cures the epoxy resin or a component (b2) that cures the component (A), and it is more preferable to use these in combination. As the component (b1), it is possible to use dicyandiamide, ureas, imidazoles, aromatic amines, other amine-based curing agents, acid anhydrides, boron chloride amine complexes, and the like. However, in particular, at least one kind of curing agent selected from dicyandiamide, ureas, imidazoles, and aromatic amines is preferably used.

From the viewpoint of allowing the curing of the epoxy resin to proceed, the content of the component (b1) is such that an amount of 1 part by mass or more is preferably contained and an amount of 2 parts by mass or more is more preferably contained with respect to 100 parts by mass of the total epoxy resin contained in the matrix resin. From the viewpoint of suppressing appearance defects after curing, an amount of 15 parts by mass or less is preferably contained, and an amount of 12 parts by mass or less is more preferably contained.

Dicyandiamide has a high melting point and has suppressed compatibility with the epoxy resin in a low temperature range, and thus in a case where it is used as the curing agent (b1), the pot life of the resin composition or the prepreg is excellent. Examples of the commercially available product of dicyandiamide include DICY7 and DICY15 (all of which are manufactured by Mitsubishi Chemical Corporation), and Dicyanex1400F (manufactured by Evonik Japan Co., Ltd.). The content of dicyandiamide is preferably 1 to 15 parts by mass and more preferably 2 to 10 parts by mass with respect to 100 parts by mass of the total epoxy resin contained in the matrix resin. The number of moles of the active hydrogen of dicyandiamide is preferably 0.4 to 1 time with respect to the total number of moles of the epoxy group of the epoxy resin contained in the matrix resin. From the viewpoint of the heat resistance of the cured product, the number of moles of the active hydrogen of dicyandiamide is more preferably 0.5 to 0.8 times.

In a case of being heated, ureas activate an epoxy group. Examples of ureas include aromatic dimethylurea in which a dimethylureide group is bonded to an aromatic ring and aliphatic dimethylurea in which a dimethylureide group is bonded to an aliphatic compound. Among these, aromatic dimethylurea is preferable from the viewpoint of the tendency that the curing speed increases and the heat resistance and bending strength of the cured product increase.

Examples of the aromatic dimethylurea include phenyldimethylurea, methylenebis(phenyldimethylurea), and tolylenebis(dimethylurea). Specific examples thereof include 4,4'-methylenebis(phenyldimethylurea) (MBPDMU), 3-phenyl-1,1-dimethylurea (PDMU), 3-(3,4-dichlorophenyl)-1,1-dimethylurea (DCMU), 3-(3-chloro-4-methylphenyl)-1,1-dimethylurea, 2,4-bis(3,3-dimethylureido)toluene (TBDMU), and dimethylurea obtained from m-xylylene diisocyanate and dimethylamine. Among these, DCMU, MBPDMU, TBDMU, or PDMU is more preferable from the viewpoint of the curing acceleration ability and the impartment of the heat resistance to the cured product. Examples of the aliphatic dimethylurea include dimethylurea obtained from isophorone diisocyanate and dimethylamine, and dimethylurea obtained from hexamethylene diisocyanate and dimethylamine. One kind of these may be used alone, or two or more kinds thereof may be used in combination.

Examples of the commercially available product of ureas include DCMU such as DCMU-99 (manufactured by HODOGAYA CHEMICAL CO., LTD.), MBPDMU such as Technicure MDU-11 (manufactured by A&C Catalysts, Inc.) and Omicure 52 (manufactured by PTI Japan Co., Ltd.), PDMU such as Omicure 94 (manufactured by PTI Japan Co., Ltd.), TBDMU such as Omicure 24 (manufactured by PTI Japan Co., Ltd.) and U-CAT 3512T (manufactured by San-Apro Ltd.), and aliphatic dimethylurea such as U-CAT 3513N (manufactured by San-Apro Ltd.).

The content of ureas is preferably 1 to 15 parts by mass and more preferably 2 to 10 parts by mass with respect to 100 parts by mass of the total epoxy resin contained in the matrix resin. In a case where the content of ureas is 1 part by mass or more, the curing of the epoxy resin tends to be accelerated, whereby mechanical properties of the cured product can be improved. On the other hand, in a case where the content of ureas is 15 parts by mass or less, the toughness of the cured product tends to be maintained high.

Imidazoles have a nitrogen atom that has an unshared electron pair in the structure thereof and can activate the epoxy group. As the imidazoles, it is also possible to use imidazole, an imidazole adduct, a clathrate imidazole, a microcapsule-type imidazole, an imidazole compound coordinated with a stabilizer, and the like.

Specific examples of the imidazole include 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine-isocyanuric acid adduct, 2-phenylimidazole isocyanuric acid adduct, 2-methylimidazole isocyanuric acid adduct, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethylimidazole, without being limited these. The imidazole that has been subjected to an adduct treatment, a clathrate treatment with a different molecule, or a microcapsule treatment, or that has been coordinated with a stabilizer is a modified imidazole. The modification makes it possible to reduce activity and accelerate curing while exhibiting an excellent pot life in a low temperature range.

Examples of the commercially available product of imidazole include 2E4MZ, 2P4MZ, 2PZ-CN, C11Z-CNS, C11Z-A, 2MZA-PW, 2MA-OK, 2P4MHZ-PW, and 2PHZ-PW (all of which are manufactured by SHIKOKU CHEMICALS CORPORATION). Examples of the commercially available product of the imidazole adduct include PN-50, PN-50J, PN-40, PN-40J, PN-31, PN-23, and PN-H (all of which are manufactured by Ajinomoto Fine-Techno Co., Inc.) which have a structure obtained by subjecting an imidazole compound to the ring-opening addition to the epoxy group of an epoxy resin. Examples of the commercially available product of the clathrate imidazole include TIC-188, KM-188, HIPA-2P4MHZ, NIPA-2P4MHZ, TEP-2E4MZ, HIPA-2E4MZ, and NIPA-2E4MZ (all of which are manufactured by NIPPON SODA Co., Ltd.). Examples of the commercially available product of the microcapsule-type imidazole include Novacure HX3721, HX3722, HX3742, and HX3748 (all of which are manufactured by Asahi Kasei E-Materials Corp.); and LC-80 (manufactured by A&C Catalysts, Inc.). The imidazole compound coordinated with a stabilizer can be prepared by combining L-07N (an epoxy-phenol-boric acid ester compound), which is a stabilizer manufactured by SHIKOKU CHEMICALS CORPORATION, with CUREDUCT P-0505 (a bisphenol A diglycidyl ether/2-ethyl-4-methylimidazole adduct), which is an imidazole adduct manufactured by SHIKOKU CHEMICALS CORPORATION. It is also possible to obtain the same effect in a case of using imidazole compounds such as the above-described various imidazoles and imidazole adducts, instead of CUREDUCT P-0505.

The content of imidazoles is preferably 1 to 15 parts by mass and more preferably 2 to 10 parts by mass with respect to 100 parts by mass of the total epoxy resin contained in the matrix resin. In a case where the content of imidazoles is 1 part by mass or more, the curing of the epoxy resin tends to be capable of being further accelerated. On the other hand, in a case where the content of imidazoles is 15 parts by mass or less, a cured product having more excellent mechanical characteristics tends to be obtained.

Examples of the aromatic amines include 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenylsulfone, 3,3'-diaminodiphenylsulfone, m-phenylenediamine, m-xylylene diamine, and diethyltoluenediamine. Among them, 4,4'-diaminodiphenylsulfone and 3,3'-diaminodiphenylsulfone, from which a cured product having excellent heat resistance and an excellent elastic modulus and furthermore, a small decrease in the linear expansion coefficient and heat resistance due to moisture absorption can be obtained, are preferable. 4,4'-diaminodiphenylsulfone is preferable from the viewpoint that the tack life of the prepreg can be maintained for a long period of time. 3,3'-diaminodiphenylsulfone is preferable since it can increase the elastic modulus and toughness of the cured product. In addition, 4,4'-diaminodiphenylsulfone and 3,3'-diaminodiphenylsulfone may be used in combination. These aromatic amines may be used alone or may be used in combination.

The content of the aromatic amines is preferably 1 to 15 parts by mass and more preferably 2 to 10 parts by mass with respect to 100 parts by mass of the total epoxy resin contained in the matrix resin. In a case where the content of the aromatic amines is 1 part by mass or more, the cured product tends to have excellent heat resistance and an excellent elastic modulus. On the other hand, in a case where the content of the aromatic amines is 15 parts by mass or less, the toughness of the cured product tends to be excellent. The number of the equivalent of active hydrogens of the amino group is preferably 0.5 to 1.5 times and more preferably 0.6 to 1.4 times the number of the equivalent of epoxy of the entire epoxy resin contained in the matrix resin. In a case where the blending amount of these epoxy resin curing agents is set to 0.5 to 1.5 times, the elastic modulus, toughness, and heat resistance of the resin cured product tend to be capable of being in a favorable range.

Examples of the commercially available product of the aromatic amines include, as 4,4'-diaminodiphenylsulfone, SEIKACURE S (active hydrogen equivalent: 62 g/eq, manufactured by Wakayama Seika Kogyo Co., Ltd.) and SUMICURE S (active hydrogen equivalent: 62 g/eq, manufactured by Sumitomo Chemical Co., Ltd.), and examples of the commercially available product of 3,3'-diaminodiphenylsulfone include 3,3'-DAS (active hydrogen equivalent: 62 g/eq, manufactured by MITSUI FINE CHEMICALS Inc.). Examples of the other aromatic amines include MDA-220 (active hydrogen equivalent: 50 g/eq, manufactured by Mitsui Chemicals, Inc.), "jERCURE (registered trade name)" W (active hydrogen equivalent: 45 g/eq, manufactured by Mitsubishi Chemical Corporation), Lonzacure (registered trade name) M-DEA (active hydrogen equivalent: 78 g/eq), "Lonzacure (registered trade name)" M-DIPA (active hydrogen equivalent: 92 g/eq)", "Lonzacure (registered trade name)" M-MIPA (active hydrogen equivalent: 78 g/eq), and "Lonzacure (registered trade name)" DETDA 80 (active hydrogen equivalent: 45 g/eq) (all of which are manufactured by LONZA K.K.).

Examples of the other amine-based curing agent that can be used as the component (b1) include meta-phenylenediamine, diaminodiphenylmethane, meta-xylenediamine, isophoronediamine, and triethylenetetramine. Examples of the acid anhydride that can be used as the component (b1) include a hydrogenated methylnadic anhydride and a methylhexahydrophthalic anhydride.

Examples of the component (b2) include a radical polymerization initiator. As the radical polymerization initiator, it is possible to use a thermal radical polymerization initiator or a photoradical polymerization initiator. Among them, it is more preferable to use a thermal radical polymerization initiator since radical polymerization can be initiated at the same time as the heat curing of the epoxy resin. Examples of the thermal radical polymerization initiator include azo-based compounds and peroxide-based compounds. Among them, peroxide-based compounds are preferable since no gas is generated at the time of the thermal decomposition.

Examples of azo-based compounds include 2,2-azobis(isobutyronitrile), 2,2-azobis(2,4-dimethylvaleronitrile), dimethyl 2,2-azobis(2-methylpropionate), 2,2-azobis(2-methylbutyronitrile), 1,1-azobis(cyclohexane-1-carbonitrile), 2,2-azobis(N-butyl-2-methylpropionamide), and dimethyl 1,1-azobis(1-cyclohexanecarboxylate).

Examples of the peroxide-based compounds include ketone peroxides such as methyl ethyl ketone peroxide (110°C) and acetylacetone peroxide (130°C); peroxyketals such as 1,1-di(t-butylperoxy) 3,3,5-trimethylcyclohexane (95°C), 1,1-di(t-hexylperoxy)cyclohexane (87.1°C), 1,1-di(t-butylperoxy)cyclohexane (90.7°C), 2,2-di(t-butylperoxy)butane (103.1°C), n-butyl 4,4-di(t-butylperoxy)valerate (104.5°C), 2,2-di(4,4-di-t-butylperoxycyclohexyl)propane (94.7°C), 1,1-di(t-hexylperoxy) 3,3,5-trimethylcyclohexane (86.7°C), and 1,1-di(t-butylperoxy)cyclododecane (95°C); hydroperoxides such as p-menthane hydroperoxide (128°C), diisopropylbenzene hydroperoxide (145.1°C), 1,1,3,3-tetramethylbutyl hydroperoxide (152.9°C), cumene hydroperoxide (157.9°C), and t-butyl hydroperoxide (166.5°C); dialkyl peroxides such as di(2-t-butylperoxyisopropyl)benzene (119.2°C), dicumyl peroxide (116.4°C), 2,5-dimethyl-2,5-di(t-butylperoxy)hexane (117.9°C), t-butylcumyl peroxide (119.5°C), di-t-hexyl peroxide (116.4°C), di-t-butyl peroxide (123.7°C), and 2,5-dimethyl-2,5-di(t-butylperoxy)hexyne-3 (128.4°C); diacyl peroxides such as diisobutyryl peroxide (32.7°C), di(3,5,5-trimethylhexanoyl)peroxide (59.4°C), lauroyl peroxide (61.6°C), disuccinic acid peroxide (65.9°C), m-toluoyl peroxide (73.1°C), dibenzoyl peroxide (73.6°C), and dioctanoyl peroxide (63°C); peroxydicarbonates such as di-n-propyl peroxydicarbonate (40.3°C), diisopropyl peroxydicarbonate (40.5°C), di(4-t-butylcyclohexyl)peroxydicarbonate (40.8°C), di(2-ethylhexyl)peroxydicarbonate (43.6°C), di-sec-butyl peroxydicarbonate (40.5°C), and di(3-methoxybutyl)peroxydicarbonate (43°C); and peroxyesters such as cumyl peroxyneodecanoate (36.5°C), 1,1,3,3-tetramethylbutyl peroxyneodecanoate (40.7°C), t-hexylperoxyneodecanoate (44.5°C), t-butyl peroxyneodecanoate (46.4°C), t-hexylperoxypivalate (53.2°C), t-butyl peroxypivalate (54.6°C), 1,1,3,3-tetramethylbutylperoxy-2-ethyl hexanoate (65.3°C), 2,5-dimethyl-2,5-di(2-ethylhexanoylperoxy)hexane (66.2°C), t-hexylperoxy-2-ethyl hexanoate (69.9°C), t-butylperoxy-2-ethyl hexanoate (72.1°C), t-hexylperoxyisopropyl monocarbonate (95°C), t-butylperoxy-3,5,5-trimethyl hexanoate (97.1°C), t-butylperoxylaurate (98.3°C), t-butylperoxyisopropyl monocarbonate (98.7°C), t-butylperoxy-2-ethylhexyl monocarbonate (99°C), t-hexylperoxybenzoate (99.4°C), 2,5-dimethyl-2,5-di(benzoylperoxy)hexane (99.7°C), t-butylperoxyacetate (101.9°C), t-butylperoxybenzoate (104.3°C), t-butylperoxymaleic acid (96.1°C), and t-butylperoxyisobutyrate (75°C). The values in parentheses indicate a 10-hour half-life temperature.

Examples of the photoradical polymerization initiator include benzophenone, 4,4-bis(diethylamino)benzophenone, 2,4,6-trimethyl benzophenone, methyl orthobenzoyl benzoate, 4-phenyl benzophenone, 2-hydroxy-1-[4-[4-(2-hydroxy-2-methylpropionyl)benzyl]phenyl]-2-methylpropan-1-one, t-butylanthraquinone, 2-ethyl anthraquinone, diethoxyacetophenone, 2-hydroxy-2-methyl-1-phenylpropan-1-one, benzyl dimethyl ketal, 1-hydroxycyclohexyl-phenyl ketone, benzoin methyl ether, benzoin ethyl ether, benzoin isopropyl ether, benzoin isobutyl ether, 2-methyl-[4-(methylthio)phenyl]-2-morpholino-1-propanone, 2-benzyl-2-dimethylamino-1-(4-morpholinophenyl)-butanone-1, diethyl thioxanthone, isopropyl thioxanthone, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)-phenylphosphine oxide, and methylbenzoyl formate.

In order to polymerize and increase the molecular weight of the component (A), the component (b2) preferably includes at least one kind of peroxide-based compounds selected from the group consisting of a diacyl peroxide, an alkyl peroxyester, a peroxydicarbonate, a peroxyketal, a dialkyl peroxide, and a hydroperoxide.

One kind of the exemplified compounds can be used alone as the component (b2) or in a combination of two or more kinds thereof. From the viewpoint of the storage stability of the prepreg, a compound having a 10-hour half-life temperature of 70°C or higher is preferable, and a compound having a 10-hour half-life temperature of 100°C or higher is more preferable. In order to allow the polymerization of the component (A) to proceed easily in the curing process of the epoxy resin, the 10-hour half-life temperature (Tg) can be set to 150°C or lower.

From the viewpoint of allowing curing to proceed, the content of the component (b2) is such that an amount of 0.1 parts by mass or more is preferably contained and an amount of 0.2 parts by mass or more is more preferably contained with respect to 100 parts by mass of the entire matrix resin. From the viewpoint of the storage stability of the prepreg, an amount of 5 parts by mass or less is preferably contained, and an amount of 3 parts by mass or less is more preferably contained, with respect to 100 parts by mass of the entire matrix resin.

### <Epoxy resin>

Examples of the epoxy resins include a bisphenol A-type epoxy resin, a bisphenol F-type epoxy resin, an epoxy resin having an oxazolidone ring skeleton, a novolak-type epoxy resin, a glycidylamine-type epoxy resin, a hydrophthalic acid-type epoxy resin, a bisphenol S-type epoxy resin, a resorcin-type epoxy resin, a hydroquinone-type epoxy resin, a bisphenoxyethanol fluoride-type epoxy resin, a bisphenol fluorene-type epoxy resin, and a biscresol fluorene-type epoxy resin. Among these, one or more epoxy resins selected from a bisphenol A-type epoxy resin, a bisphenol F-type epoxy resin, an epoxy resin having an oxazolidone ring skeleton, a novolak-type epoxy resin, and a glycidylamine-type epoxy resin are preferable. It is possible to use the liquid and solid epoxy resins described below in combination. In a case of combining a plurality of types of epoxy resins, it is possible to obtain a prepreg having excellent handleability and a fiber-reinforced plastic having excellent mechanical characteristics and heat resistance.

The liquid epoxy resin is an epoxy resin that is liquid at 25°C. The liquid epoxy resin contributes to the improvement of the solubility of the thermoplastic resin and the improvement of the strength, elastic modulus, and heat resistance of the cured product. The viscosity of the liquid epoxy resin that is liquid at 25°C is preferably 500 Pa·s or less and more preferably 300 Pa·s or less at 25°C. In addition, it is preferably 0.1 Pa·s or more. In a case where the viscosity is in this range, the workability of the epoxy resin composition can be favorable. The viscosity can be measured by applying periodic deformation (distortion) to a sample with a rotary rheometer and detecting a stress and a phase difference, which are generated by the periodic deformation (distortion). A bisphenol-type epoxy resin is preferable. The amount of the epoxy resin is preferably 70 parts by mass or more and more preferably 80 parts by mass or more with respect to 100 parts by mass of the matrix resin. It can be set to 95 parts by mass or less with respect to 100 parts by mass of the matrix resin.

The content of the liquid epoxy resin is preferably 20 parts by mass or more and 80 parts by mass or less with respect to 100 parts by mass of the total epoxy resin contained in an epoxy resin composition. Since it is possible to obtain a resin cured product having excellent strength and an excellent elastic modulus, the lower limit of the content of the liquid epoxy resin is more preferably 25 parts by mass or more and still more preferably 28 parts by mass or more. The content of the liquid epoxy resin is more preferably 75 parts by mass or less, still more preferably 70 parts by mass or less, and particularly preferably 50 parts by mass or less since a cured product having excellent toughness can be obtained. The content can be set to the mixing amount at which the resin composition is produced.

Examples of the commercially available product of the liquid epoxy resin include bisphenol A-type epoxy resins (liquid epoxy resins) that are liquid at 25°C, such as jER 827 (epoxy equivalent: 185 g/eq) and jER 828 (epoxy equivalent: 189 g/eq) (all of which are manufactured by Mitsubishi Chemical Corporation), YD-127 (epoxy equivalent: 185 g/eq) and YD-128 (epoxy equivalent: 189 g/eq) (all of which are manufactured by NIPPON STEEL Chemical & Material Co., Ltd.), EPICLON 840 (epoxy equivalent: 185 g/eq) and EPICLON 850 (epoxy equivalent: 189 g/eq) (all of which are manufactured by DIC Corporation), D.E.R331 (epoxy equivalent: 187/eq) and D.E.R332 (epoxy equivalent: 173 g/eq) (manufactured by THE DOW CHEMICAL COMPANY); and bisphenol F-type epoxy resins (liquid epoxy resins) that are liquid at 25°C, such as jER 806 (epoxy equivalent: 165 g/eq) and jER 807 (epoxy equivalent: 170 g/eq) (all of which are manufactured by Mitsubishi Chemical Corporation), YDF-170 (epoxy equivalent: 170 g/eq) (manufactured by NIPPON STEEL Chemical & Material Co., Ltd.), EPICLON 830 (epoxy equivalent: 170 g/eq) and EPICLON 835 (epoxy equivalent: 172 g/eq) (all of which are manufactured by DIC Corporation), and D.E.R354 (epoxy equivalent: 170 g/eq) (manufactured by THE DOW CHEMICAL COMPANY), without being limited these. One kind of these may be used alone, or two or more kinds thereof may be combinedly used in combination.

In a case of containing the solid epoxy resin, the viscosity at room temperature can be increased, whereby the prepreg is easily handled. The solid epoxy resin is preferably an epoxy resin having a softening point of 70°C or higher. It is possible to use a bisphenol-type epoxy resin having a softening point of 70°C or higher, an epoxy resin having an oxazolidone ring skeleton, and an epoxy resin that has been reacted in advance with a curing agent. The softening point is preferably 72°C or higher and more preferably 75°C or higher since the resin cured product has excellent toughness. On the other hand, it is preferably 150°C or lower and more preferably 145°C or lower since the heat resistance of the resin cured product is properly maintained and a prepreg having excellent drapability (mold shape followability) can be obtained.

The content of the solid epoxy resin is preferably 10 parts by mass or more and 80 parts by mass or less with respect to 100 parts by mass of the total epoxy resin contained in an epoxy resin composition. The lower limit of the content of the solid epoxy resin is more preferably 13 parts by mass or more and still more preferably 15 parts by mass or more since it is possible to obtain a prepreg having excellent tackiness and a resin cured product having excellent toughness. The upper limit of the content of the solid epoxy resin is more preferably 70 parts by mass or less and still more preferably 60 parts by mass or less since it is possible to obtain a prepreg having excellent mold shape followability. The content can be set to the mixing amount at which the resin composition is produced.

Examples of the commercially available product of the solid epoxy resins include bisphenol A-type epoxy resins such as jER 1055, jER 1004, jER 1007, and jER 1009 (all of which are product names, manufactured by Mitsubishi Chemical Corporation), EPICLON 2050, EPICLON 3050, EPICLON 4050, EPICLON 7050, EPICLON HM-091, and EPICLON HM-101 (all of which are product names, manufactured by DIC Corporation), and YD-902, YD-903N, YD-904, YD-907, YD-7910, and YD-6020 (all of which are product names, manufactured by NIPPON STEEL Chemical & Material Co., Ltd.); bisphenol F-type epoxy resins such as jER 4004P, jER 4005P, jER 4007P, and jER 4010P (all of which are product names, manufactured by Mitsubishi Chemical Corporation), and YDF-2004 and YDF-2005RD (all of which are product names, manufactured by NIPPON STEEL Chemical & Material Co., Ltd.); and epoxy resins having an oxazolidone ring skeleton, such as AER4152, AER4151, LSA3301, and LSA2102 (all of which are product names, manufactured by Asahi Kasei E-Materials Corp.), ACR1348 (product name, manufactured by ADEKA Corporation), DER852 and DER858 (product name, manufactured by THE DOW CHEMICAL COMPANY), TSR-400 (product name, manufactured by DIC Corporation), and YD-952 (product name, manufactured by NIPPON STEEL Chemical & Material Co., Ltd.). As the solid epoxy resin, one kind of these may be used alone, or two or more kinds thereof may be combinedly used in combination.

The matrix resin may contain an epoxy resin other than the epoxy resin described above. Examples of other epoxy resins include bisphenol A-type epoxy resins such as jER 834 (product name, manufactured by Mitsubishi Chemical Corporation), EPICLON 860 (product name, manufactured by DIC Corporation), and YD-134 (product name, manufactured by NIPPON STEEL Chemical & Material Co., Ltd.), and novolak-type epoxy resins such as EPICLON N-740 (product name, manufactured by DIC Corporation) and YDPN-638 (product name, manufactured by NIPPON STEEL Chemical & Material Co., Ltd.). One kind of these may be used alone, or two or more kinds thereof may be combinedly used in combination.

### <Thermoplastic resin and additive>

A thermoplastic resin can be used for the matrix resin composition. Examples of the thermoplastic resin include polyamide, polyester, polycarbonate, polyether sulfone, polyphenylene ether, polyphenylene sulfide, polyether ether ketone, polyether ketone, polyimide, polytetrafluoroethylene, polyether, polyolefin, a liquid crystal polymer, polyarylate, polysulfone, polyacrylonitrile styrene, polystyrene, polyacrylonitrile, polymethyl methacrylate, an acrylonitrile-butadiene-styrene copolymer (ABS), an acrylonitrile-ethylene propylene rubber-styrene copolymer (AES), an acrylonitrile-acrylic rubber- styrene copolymer (ASA), polyvinyl chloride, a polyvinyl formal resin, a phenoxy resin, and a block polymer, without being limited these. Among these, polyether sulfone, a polyvinyl formal resin, or a phenoxy resin is more preferable since the resin flow controllability to the reinforcing fibers is excellent. A polyvinyl formal resin is still more preferable since the resin flow controllability is excellent even in a case where the blending amount is small. One kind of thermoplastic resin may be used alone, or two or more kinds thereof may be used in combination.

The content of the thermoplastic resin is such that an amount of 1 part by mass or more and 30 parts by mass or less is preferably contained, an amount of 2 parts by mass or more and 10 parts by mass or less is more preferably contained, and an amount of 3 parts by mass or more and 6 parts by mass or less is still more preferably contained, with respect to 100 parts by mass of the total epoxy resin contained in the matrix resin. In a case where the content of the thermoplastic resin is 1 part by mass or more, the resin flow control tends to be favorably exhibited, which is preferable. On the other hand, In a case where the content of the thermoplastic resin is 30 parts by mass or less, the increase in the viscosity at the time of resin impregnation is small, which is preferable.

Among thermoplastic resins, a phenoxy resin, polyether sulfone, polyether imide, polyvinyl formal, or a block polymers is preferable from the viewpoint of the excellent resin flow controllability and the like. In particular, in a case where a phenoxy resin, polyether sulfone, or polyether imide is used, the heat resistance and flame retardance of the resin cured product are further increased.

Examples of the additive include a curing accelerator for an epoxy resin, an inorganic filler, an internal mold release agent, an organic pigment, and an inorganic pigment. The epoxy resin composition may include various known additives, as necessary, in a range in which the effect of the present invention is not impaired. Examples of the additive include phosphorus-based flame retardants (phosphorus-containing epoxy resins, red phosphorus, phosphazene compounds, phosphates, phosphate esters, and the like), hydrated metal compound systmes as inorganic flame retardants (aluminum hydroxide, magnesium hydroxide, and the like), inorganic oxide and other auxiliary agents (antimony compounds, zinc borate, zinc stannate, Mo compounds, ZrO, zinc sulfide, zeolite, titanium oxide nanofillers, and the like), silicone oil, wetting and dispersing agents, antifoaming agents, defoaming agents, natural waxes, synthetic waxes, metal salts of straight-chain fatty acids, acid amides, esters, mold release agents such as paraffins, powders such as crystalline silica, fused silica, silicic acid calcium, alumina, calcium carbonate, talc, and barium sulfate, inorganic fillers such as glass fiber and carbon fiber, coloring agents such as carbon black and red iron oxide, and silane coupling agents. One kind of these may be used alone, or two or more kinds thereof may be used in combination.

### <Manufacturing method for matrix resin composition>

The matrix resin composition is obtained, for example, by mixing each of the above-described components. The matrix resin composition is preferably a thermosetting resin composition. Examples of the mixing method for each component include a method using a mixer such as a three-roll mill, a planetary mixer, a kneader, a homogenizer, and a homo-disperser. The matrix resin composition can be used, for example, in the manufacture of the prepreg by impregnating a reinforcing fiber substrate with the matrix resin composition, as will be described later. Alternatively, it is possible to obtain a film of the matrix resin composition by coating the matrix resin composition on the release paper or the like and carrying out curing. In addition, the viscosity of the matrix resin composition at 30°C can be set to 100 to 1,000,000 Pa·s.

### <Reinforcing fiber>

The reinforcing fibers can be present as a reinforcing fiber substrate (aggregate of reinforcing fibers) in the prepreg and are preferably a sheet. The reinforcing fibers may be ones in which reinforcing fibers are arranged in a single direction, or may be ones in which reinforcing fibers are arranged in a random direction. Examples of the form of the reinforcing fiber substrate include a woven fabric of reinforcing fibers, a nonwoven fabric of reinforcing fibers, and a sheet in which long fibers of reinforcing fibers are aligned in one direction. Since it is possible to mold, with reinforcing fibers, a fiber-reinforced composite article having a high specific strength and a high specific elastic modulus, the reinforcing fibers are preferably a sheet formed of a bundle of reinforcing fibers in which the continuous fibers are aligned in a single direction and, from the viewpoint of ease of handling, woven reinforcing fibers are preferable.

Examples of the material of the reinforcing fibers include glass fibers, carbon fibers, aramid fibers, and boron fibers. The reinforcing fibers are preferably carbon fibers from the viewpoint of the mechanical properties and the weight reduction of the fiber-reinforced plastic to be obtained.

The fiber diameter of the carbon fiber is preferably 3 to 12 µm. The number of carbon fibers in the carbon fiber bundle is preferably 1,000 to 70,000. From the viewpoint of the rigidity of the fiber-reinforced composite article to be obtained, the strand tensile strength of the carbon fibers is preferably 1.5 to 9 GPa, and the strand tensile modulus of the carbon fibers is preferably 150 to 260 GPa. Here, the strand tensile strength and the strand tensile modulus of the carbon fibers are values measured in conformity with JIS R7601: 1986.

### <Manufacturing method for prepreg>

The prepreg is obtained, for example, by impregnating the reinforcing fiber substrate with the matrix resin composition. Examples of the method of impregnating the reinforcing fiber substrate with the matrix resin composition include a wet method in which the epoxy resin composition is dissolved in a solvent such as methyl ethyl ketone or methanol to reduce the viscosity and then the reinforcing fiber substrate is impregnated with the matrix resin composition; and a hot-melt method (dry method) in which the reinforcing fiber substrate is impregnated after reducing the viscosity of the matrix resin composition by heating, without being limited these. The impregnation temperature is set according to the viscosity of the matrix resin. However, it is preferably 40°C to 90°C and more preferably 50°C to 80°C from the viewpoint that it is necessary to sufficiently impregnate the reinforcing fibers with the matrix resin without starting a curing reaction of the matrix resin.

The wet method is a method in which a reinforcing fiber substrate is immersed in a solution of a matrix resin composition and subsequently pulled out, and the solvent is evaporated using an oven or the like. The hot-melt method includes a method in which a reinforcing fiber substrate is directly impregnated with a matrix resin composition the viscosity of which has been reduced by heating, and a method in which a matrix resin composition is temporarily coated on the surface of a substrate such as the release paper to produce a film, the film is subsequently superimposed from one side or both sides of the reinforcing fiber substrate, and the reinforcing fiber substrate is impregnated with a resin by applying heat and pressure thereto. A coating layer obtained by coating the surface of a substrate such as the release paper may be used in the hot-melt method without carrying out curing, or may be used in the hot-melt method after curing the coating layer. The hot-melt method is preferable since substantially no solvent remains to be present in the prepreg.

The content of the matrix resin composition in the prepreg (referred to below as the "resin content") is preferably 15% to 50% by mass, more preferably 20% to 45% by mass, and still more preferably 25% to 40% by mass, with respect to the total mass of the prepreg. In a case where the resin content is equal to or larger than the above-described lower limit value, it is possible to sufficiently secure the adhesiveness between the reinforcing fibers and the matrix resin and, in a case where the resin content is equal to or smaller than the above-described upper limit value, the mechanical properties of the fiber-reinforced plastic are further improved.

### [Fiber-reinforced plastic]

The fiber-reinforced plastic is obtained by curing the prepreg. That is, the fiber-reinforced plastic includes a cured product of the matrix resin composition contained in the prepreg and includes reinforcing fibers. It is possible to obtain a cured product of a laminate in which two or more prepregs are laminated. A molded article consisting of a fiber-reinforced plastic is obtained by carrying out molding, for example, according to a method of laminating the two or more prepregs described above and then subjecting the obtained laminate to thermal curing while applying pressure thereto. A prepreg consisting of a thermoplastic resin composition and reinforcing fibers other than the prepreg described above, or a prepreg consisting of an epoxy resin composition and reinforcing fibers may be laminated.

Examples of the molding method include a press molding method, an autoclave molding method, a bagging molding method, a wrapping tape method, an internal pressure molding method, a sheet wrap molding method, resin transfer molding (RTM) in which a molded article is obtained by impregnating filaments or preform of reinforcing fibers with a matrix resin composition and carrying out curing, vacuum assisted resin transfer molding (VaRTM), and filament winding, resin film infusion (RFI), without being limited to these molding methods. A press molding method is preferable from the viewpoint that productivity is high and fiber-reinforced plastic having a high quality is easily obtained.

When manufacturing a fiber-reinforced plastic by the press molding method, a prepreg or a preform produced by laminating prepregs is preferably interposed between metal molds prepared at a curing temperature in advance and heated and pressed to cure the prepreg or the preform. The temperature in the metal mold at the time of press molding is preferably 100°C to 160°C. In addition, it is preferable to cure the prepreg or the preform for 1 to 20 minutes under a condition of 1 to 15 MPa.

### [Examples]

Hereinafter, the present invention will be described in more detail according to Examples; however, the present invention is not limited to these. The raw materials used in Examples and Comparative Examples are shown below.

### "Raw material"

### <Epoxy resin>

jER 807: A liquid bisphenol F-type epoxy resin (manufactured by Mitsubishi Chemical Corporation, product name: "jER 807").

jER 828: A liquid bisphenol A-type epoxy resin (manufactured by Mitsubishi Chemical Corporation, product name: "jER 828").

jER 4007P: A solid bisphenol F-type epoxy resin (manufactured by Mitsubishi Chemical Corporation, product name: "jER 4007P").

jER 1004: A solid bisphenol A-type epoxy resin (manufactured by Mitsubishi Chemical Corporation, product name: "jER 1004").

YD-952: A solid epoxy resin having an oxazolidone ring skeleton (manufactured by NIPPON STEEL & SUMITOMO METAL CORPORATION, product name: "EPTOTO YD-952").

MY0600: Triglycidyl-m-aminophenol (manufactured by HUNTSMAN JAPAN Co., Ltd., product name: "ARALDITE MY 0600").

### <Component (A)>

A-9300S: Tris-(2-acryloxyethyl)isocyanurate (trifunctional, manufactured by SHIN-NAKAMURA CHEMICAL Co., Ltd., product name: "NK ESTER A-9300S").

IBXA: Isobornyl acrylate (monofunctional, manufactured by Osaka Organic Chemical Industry Ltd., product name: "IBXA").

M-315: Isocyanuric acid EO-modified di- and triacrylate (trifunctional, manufactured by Toagosei Company, Limited, product name: "ARONIX M-315").

FA-310AH: Phenoxyethyl acrylate (monofunctional, manufactured by Hitachi Chemical Co., Ltd., product name: "FANCRYL FA-310AH")

### <Component (b1)>

DICYANEX 1400F: Dicyandiamide (active hydrogen equivalent: 21 g/eq, manufactured by EVONIK JAPAN CO., LTD., product name "DICYANEX 1400F").

DCMU-99: 3-(3,4-dichlorophenyl)-1,1-dimethylurea (manufactured by HODOGAYA CHEMICAL CO., LTD., product name: "DCMU-99").

### <Component (b2)>

PERCUMYL D: Dicumyl peroxide (10-hour half-life temperature: 116.4°C, manufactured by NOF Corporation, product name: "PERCUMYL D").

### <Thermoplastic resin>

VINYLEC E: A polyvinyl formal resin (manufactured by JNC Corporation, product name: "VINYLEC E").

VINYLEC K: A polyvinyl formal resin (manufactured by JNC Corporation, product name: "VINYLEC K").

### (Experimental Examples 1 to 4 and Comparative Example 1)

Resin compositions were prepared as follows by using jER 807, jER 4007P, and YD-952 as epoxy resins, A-9300S and IBXA as the component (A), DICYANEX 1400F and DCMU-99 as the component (b1), PERCUMYL D as the component (b2), and VINYLEC E as a thermoplastic resin.

First, according to the formulation shown in Table 1, the component (b1) (solid) and a liquid component of the epoxy resin were weighed into a container so that the mass ratio of the solid component to the liquid component was 1:1, followed by mixing with stirring. Further, this was finely mixed with a three-roll mill to obtain a master batch containing a curing agent.

Subsequently, in the formulation shown in Table 1, an epoxy resin and a thermoplastic resins other than those used in the master batch containing a curing agent were weighed into a flask, heated and stirred at 150°C using an oil bath, and dissolved and mixed. Thereafter, at the time when cooling was carried out to 65°C, the above-described master batch containing a curing agent, the component (A), and the component (b2) were added thereto, followed by mixing with stirring, whereby an uncured thermosetting resin composition was obtained.

### (Comparative Example 2)

A thermosetting resin composition was prepared in the same manner as in Experimental Examples 1 to 4 and Comparative Example 1 to produce a resin plate, except that YD-952 as an epoxy resin and the thermoplastic resin were not used and M-315 was used as the component (A) as shown in the blending formulation shown in Table 1, and then the phase separation structure was measured; however, the phase separation structure was not confirmed.

### (Experimental Example 5 and Comparative Example 3)

Resin compositions were prepared as follows using jER 828, jER 1004, and MY0600 as epoxy resins, DICYANEX 1400F and DCMU-99 as the component (b1), and VINYLEC K as a thermoplastic resin.

First, according to the formulation shown in Table 1, the component (b1) (solid) and a liquid component of the epoxy resin were weighed into a container so that the mass ratio of the solid component to the liquid component was 1:1, followed by mixing with stirring. Further, this was finely mixed with a three-roll mill to obtain a master batch containing a curing agent.

Subsequently, in the formulation shown in Table 1, an epoxy resin and a thermoplastic resins other than those used in the master batch containing a curing agent were weighed into a flask, heated and stirred at 150°C using an oil bath, and dissolved and mixed. Thereafter, at the time when cooling was carried out to 65°C, the master batch containing a curing agent was added thereto, followed by mixing with stirring, whereby an uncured thermosetting resin composition was obtained.

### "Production of resin plate"

The uncured thermosetting resin composition was injected between two glass plates to be formed into a plate shape, the temperature was raised at 2°C/min, and the temperature was maintained in an oven atmospheric temperature of 130°C for 90 minutes to subject the uncured thermosetting resin composition to thermal curing, whereby a resin plate having a thickness of 2 mm was produced.

The produced resin plate was subjected to various measurements and evaluations according to the description for each of the evaluation methods below. The results are shown in Table 1.

"Measurement of bending strength, bending elastic modulus, strain at maximum stress, and breaking strain of resin plate"

The resin plate having a thickness of 2 mm obtained in "Production of resin plate" described above was processed into a size of a length of 60 mm and a width of 8 mm to obtain a test piece. The test piece was subjected to the measurement of the bending strength, bending elastic modulus, strain at maximum stress, and breaking strain of the resin plate in an environment of a temperature of 23°C and a humidity of 50% RH, by using a universal testing machine (manufactured by INSTRON, "INSTRON 5965") equipped with three-point bending jig (indenter R = 3.2 mm, support R = 3.2 mm, distance between supports ((L) = 32 mm) at a crosshead speed of 2 mm/min. Specifically, the stress-strain curve obtained under the above-described measurement conditions was used to calculate the bending elastic modulus (unit: GPa) according to the split line method in a section of a bending strain of 0.05% to 0.25%. In addition, the maximum bending stress of the stress-strain curve obtained under the above-described measurement conditions was obtained as the bending strength (unit: MPa), and the bending strain upon the maximum bending stress was obtained as the strain at maximum stress (unit:%). A bending strain at the time when the test piece was broken under the above-described measurement conditions was obtained as the breaking strain (unit:%).

### "Measurement of phase separation structure"

An ultrathin section having a thickness of 70 nm was cut out from the resin plate having a thickness of 2 mm obtained in "Production of resin plate" described above, and the obtained section was exposed to an RuO₄ vapor for 7 minutes to be subjected to electron staining. The phase separation structure of the stained ultrathin sections was observed using a transmission electron microscope (TEM) at a setting of an acceleration voltage of 80 kV. The obtained TEM image was analyzed using the image analysis software ImageJ to measure the sizes R of the domains X and the distance L between the domains X. The median value of the maximum Feret's diameter of the domain X was taken as the size R of the domain X, and the median value of the most adjacent distance was taken as the distance L between the domains X. The size R of the domain X is set to a median value of the maximum distance (maximum Feret's diameter) between parallel tangential lines tangent to the outline of each domain X. In addition, The distance L between the domains X is set to a median value of a distance (most adjacent distance) from a centroid of a certain domain X to a centroid of another domain X most adjacent to the domain X. 150 or more domains X were analyzed, and each median value was determined from the distribution of the size R and the distance L.
TEM device: JEM-1400 Flash (manufactured by JEOL Ltd.)
Condition: acceleration voltage: 80 kV
Observation magnification: 3,000 times

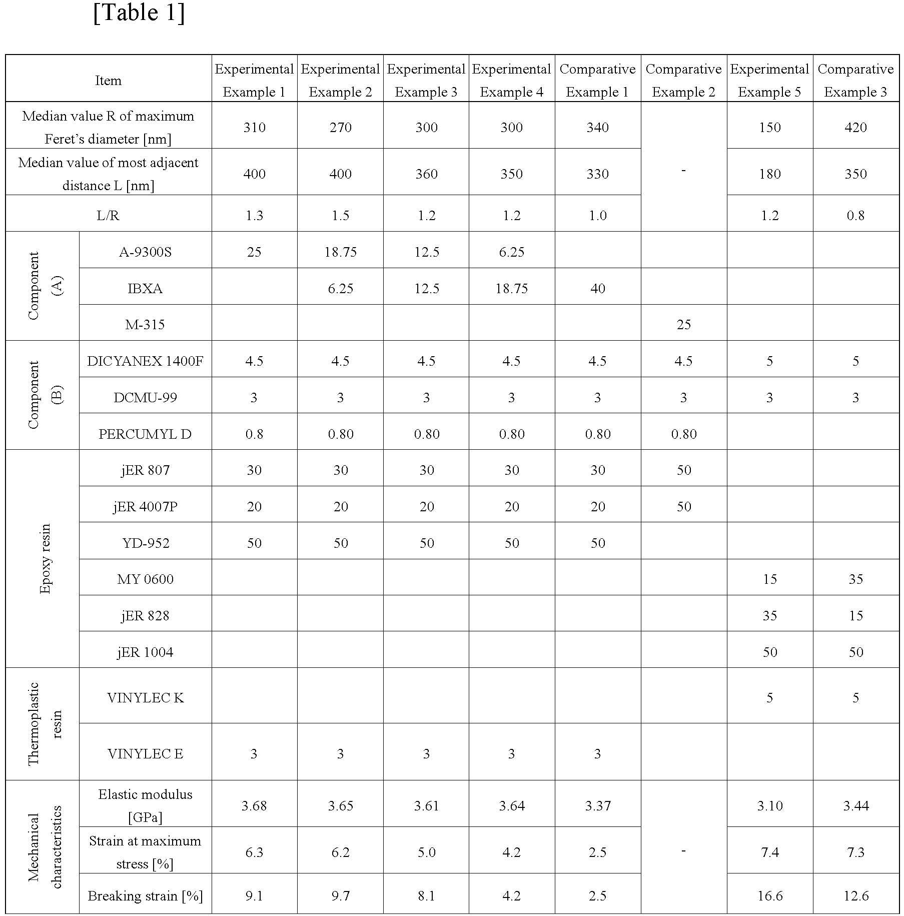

(In Table 1, the content of the component is indicated in terms of part by mass.)

The resin compositions produced in Experimental Examples 1 to 4 showed an excellent elastic modulus and excellent breaking strain as compared with that in Comparative Example 1. In Comparative Example 2, the phase separation structure could not be confirmed. The resin composition produced in Experimental Example 5 showed excellent breaking strain as compared with that in Comparative Example 3. It is conceived that a fiber-reinforced plastic obtained by using the resin composition produced in the experimental examples for a prepreg and curing the prepreg is excellent in elastic modulus and elongation.

### (Reference Example 1)

A thermosetting resin composition 1 was prepared in the same manner as in Experimental Example 1 to produce a resin plate 1, except that FA-310AH was used as the component (A) and the blending amount of the PERCUMYL D was set to 0.53 parts by mass as shown in the blending formulation shown in Table 1, and as a result of measuring the phase separation structure, the phase separation structure was confirmed.

Using a comma coater (manufactured by HIRANO TECSEED Co., Ltd., "M-500"), the uncured thermosetting resin composition 1 was applied onto the release paper at a resin areal weight of 27 g/m² to produce a resin film. Carbon fibers (TR 50S15L, manufactured by Mitsubishi Chemical Corporation) were wound around over this resin film with a drum winding device so that a sheet having a fiber areal weight of 125 g/m² was formed. Further, another resin film was bonded to the carbon fiber sheet on the drum winding device. The carbon fiber sheet sandwiched between two resin films was passed through a fusing press (Asahi Garment Machinery Co., Ltd., JR-600LTSW) under conditions of a temperature of 70°C, a pressure of 0.2 MPa, and a feed speed of 3 m/min, and the carbon fiber sheet was impregnated with the uncured thermosetting resin composition 1, thereby obtaining a unidirectional prepreg having a prepreg areal weight of 179 g/m² and a resin content of 30% by mass.

Eighteen sheets of the obtained prepreg were laminated so that the carbon fibers were in the same direction, the temperature thereof was raised to 130°C at 2°C/min in an autoclave at a pressure of 0.7 MPa, and thermal curing was carried out at 130°C for 90 minutes to obtain a carbon fiber-reinforced plastic panel.

A cross section of the obtained carbon fiber-reinforced plastic was subjected to mechanical polishing to obtain a highly smooth mirror surface. The obtained smooth cross section was exposed to an OsO₄ vapor for 16 hours to be subjected to electron staining and further subjected to a conducting treatment, and then, a backscattered electron image of the cross section subjected to the electron staining was observed by using a scanning electron microscope (JSM-7610F, manufactured by JEOL Ltd.) having a setting of an acceleration voltage of 5 kV. As a result, it was confirmed that a phase separation structure similar to that of the resin plate 1 is formed inside the matrix resin between the carbon fibers.

### [Industrial Applicability]

In a case of using the prepreg having the form described above, it is possible to obtain a fiber-reinforced plastic having excellent toughness and an excellent elastic modulus. Accordingly, the present invention can be applied widely from a fiber-reinforced plastic molded product having excellent mechanical properties and a molded product for a use application in sports/leisure such as a fishing rod, a golf shaft, or a racket, to a molded product for an industrial use application such as aircraft or an automobile.

### [Reference Signs List]

1: Domain Y
2: Domain X
3: Feret's diameter

## Claims

1. A prepreg comprising:
reinforcing fibers, in particular including carbon fibers; and
a matrix resin,
wherein the matrix resin contains an epoxy resin,
a cured product obtained in a case where the matrix resin is cured under the following curing condition has a sea-island phase separation structure consisting of a domain X, which optionally contains a polymer of a (meth)acrylate monomer, and a domain Y, which optionally contains a cured product of an epoxy resin,
the domain X constitutes an island part in which a size R is 400 nm or less, in particular 1 nm or more, where the size R is measured according to the following measurement method, and
a ratio L/R of a distance L between the domains X to the size R is 1.1 or more, in particular 100 or less,
the curing condition; the matrix resin is injected between two glass plates to be formed into a plate shape having a thickness of 2 mm, and a temperature is raised to an oven atmospheric temperature of 130°C at 2 °C/min and maintained at 130°C for 90 minutes,
the measurement condition; as a pretreatment, a section having a thickness of 60 to 90 nm is cut out using an ultramicrotome from a cross section of the cured product, and the obtained section is exposed to an RuO₄ vapor for 7 minutes to be subjected to electron staining, or a section having a thickness of 60 to 90 nm is cut out using an ultramicrotome from a cross section of the cured product that has been exposed in advance to an OsO₄ vapor for 16 hours, in a state where an acceleration voltage is set to 80 kV, a transmission electron microscope (TEM) is used to observe phase separation structure of the section subjected to the electron staining by the pretreatment, to acquire a TEM image, the obtained TEM image is subjected to smoothing and background subtraction by using image analysis software, and subsequently, a boundary of a binarized image is detected,
where the size R is set to a median value of a maximum Feret's diameter of the domain X, and the distance L between the domains X is set to a median value of a distance from a centroid of the domain X to a centroid of another domain X most adjacent to the domain X.

2. The prepreg according to Claim 1,
wherein the matrix resin contains the following components (A) and (B),
the component (A): a (meth)acrylate monomer, which optionally includes one or both of a monofunctional (meth)acrylate monomer and a polyfunctional (meth)acrylate monomer,
the component (B): a curing agent.

3. The prepreg according to Claim 2,
wherein the component (B) includes a component (b1) which is at least one kind selected from dicyandiamide, ureas, imidazoles, and aromatic amines, in particular wherein the prepreg contains 1 to 15 parts by mass of the component (b1) with respect to 100 parts by mass of a total epoxy resin contained in the matrix resin.

4. The prepreg according to Claim 2 or 3,
wherein the component (B) includes a component (b2) which is at least one kind of a radical polymerization initiator, optionally satisfying one or more of the following (i) to (iii):
(i) the prepreg contains 0.1 to 5 parts by mass of the component (b2) with respect to 100 parts by mass of an entire matrix resin;
(ii) the component (b2) includes a compound having a 10-hour half-life temperature of 70°C or higher; and
(iii) the component (b2) includes at least one kind of peroxide-based compounds selected from the group consisting of a diacyl peroxide, an alkyl peroxyester, a peroxydicarbonate, a peroxyketal, a dialkyl peroxide, and a hydroperoxide.

5. The prepreg according to any one of Claims 1 to 4,
wherein the prepreg contains 5 to 45 parts by mass of the component (A) with respect to 100 parts by mass of an entire epoxy resin.

6. A fiber-reinforced plastic that is obtained by curing the prepreg according to any one of Claims 1 to 5.

7. A fiber-reinforced plastic comprising:
reinforcing fibers, in particular including carbon fibers; and
a matrix resin,
wherein the matrix resin has a sea-island phase separation structure consisting of a domain X, optionally containing a polymer of a (meth)acrylate monomer, and a domain Y, optionally containing a cured product of an epoxy resin,
the domain X constitutes an island part in which a size R is 400 nm or less, where the size R is measured according to the following measurement method, and
a ratio L/R of a distance L between the domains X to the size R is 1.1 or more,
the measurement condition; as a pretreatment, a cross section of the fiber-reinforced plastic is subjected to mechanical polishing to obtain a mirror surface, the obtained smooth cross section is exposed to an RuO₄ vapor or an OsO₄ vapor to be subjected to electron staining, after carrying out a conducting treatment, a scanning electron microscope (SEM) set to an acceleration voltage of 5 kV is subsequently used to acquire a backscattered electron image of the cross section subjected to the electron staining, a phase separation structure is observed, the obtained backscattered electron image is subjected to smoothing and background subtraction by using image analysis software, and subsequently, a boundary of a binarized image is detected, where the size R is set to a median value of a maximum Feret's diameter of the domain X, and the distance L between the domains X is set to a median value of a distance from a centroid of the domain X to a centroid of another domain X most adjacent to the domain X.

8. The fiber-reinforced plastic according to Claim 7,
wherein the ratio L/R is 100 or less.

9. The fiber-reinforced plastic according to Claim 7 or 8,
wherein the size R is 1 nm or more.

10. A manufacturing method for the prepreg according to any one of Claims 1 to 5, the manufacturing method comprising:
an impregnation step of superimposing a film consisting of the matrix resin and heating and pressurizing the superimposed film to impregnate a reinforcing fiber substrate including the reinforcing fibers with the matrix resin.
